# EUROPEAN PATENT APPLICATION

(11) **EP 4 518 416 A1**
(43) Date of publication of application: **05.03.2025**
(21) Application number: 23194263.2
(22) Date of filing: 30.08.2023
(51) Int. Cl.: H04W 28/02

(54) **SEAMLESS SERVICE ASSURANCE FOR A UE IN 4G AND/OR 5G NETWORKS**

(71) Applicant: Deutsche Telekom AG, 53113 Bonn (DE)
(72) Inventor: AMEND, Markus, 63667 Nidda (DE)
(74) Representative: Braun-Dullaeus Pannen Emmerling Patent- & Rechtsanwaltspartnerschaft mbB

(57) **Abstract**

Techniques to dynamically provide dedicated telecommunication network resources between an UE and a telecommunication network, wherein the telecommunication network comprises a LTE core and a 4G frontend and/or a 5G NR frontend, wherein the UE communicates with the LTE core by using the 4G frontend and/or a 5G NR frontend, the method comprising the following steps:
• Running a service on the UE, wherein the UE evaluates if the service requires certain QoS values, and if the service requires certain QoS values:
• Checking if a communication via 5G SA, 5G NSA or LTE is available, and if the communication is only available via 5G NSA or LTE:
• Using an API interface by the UE to communicate required QoS values via the 4G frontend or the 5G NR frontend to the LTE core;
• Providing communication resources by the LTE core to the UE according to the required QoS values.

## Description

The invention relates to techniques to provide a seamless service assurance for a UE in 4G and 5G networks.

As 5G cellular standard was introduced for the first time in 3GPP rel. 15, network slicing (NWS) and URSP (UE Route selection policy) became available. The concept of NWS enables to provide dedicated resources and quality levels for data transport between a UE (user equipment) and the 5G core of the network provider by providing different network slices with different properties. The URSP allows a dynamic provisioning of those network slices (and DNN, PDU, etc.) from the 5G core towards the UE. Especially URSP enables to make dedicated network slices available only to specified services and/or applications of the UE.

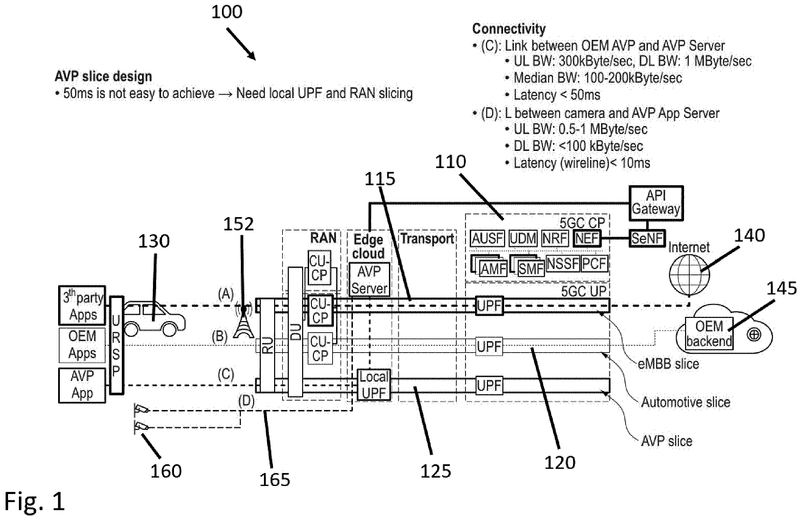

NWS and URSP enables technical scenarios like Automated Valet Parking (AVP) that is shown in Fig. 1. In this scenario, it is assumed that a car is entering a parking area in which it can be guided automatically to a parking slot. However, there can be cases that the car is not able to fulfill this task with its own resources by fully automatic driving but that it needs support from external sensors like video cameras, distance sensors, etc.

Additionally, the car can get guidance from a system like an AVP-server that can recommend free parking slots and can also receive and consider positions from other cars within the parking area.

However, autonomous driving can be a critical moment process with respect for safety reasons because it requires a fast reaction with respect to different situations - for example if an obstacle is being detected. Typically, the associated reaction times are in the range of < 10-50 ms. That means that when applying a AVP scenario in which external sensors are part of the technical solution, it needs to be guaranteed that this sensor information is being provided via the AVP server to the car and vice versa in the shortest possible time by using telecommunication means.

The first 5G networks that have emerged in Germany since 2019 were based on previously existing 4G/LTE networks. They are therefore not completely stand-alone networks, but 5G deployments that are still based in part on 4G - in technical terms "Non-Standalone 5G" or 5G NSA for short.

From a technical point of view, 5G NSA means that the 5G network shares its core network - i.e. the network-internal control and switching technology - with an existing 4G/LTE network. This makes it easier for network operators to roll out 5G quickly and is also the technical prerequisite for transition technologies such as DSS (Dynamic Spectrum Sharing). A mobile base station does transmit 5G radio signals (5G New Radio, or 5G NR for short) - but in the central network instances the network is still based on the architecture of 4G/LTE. For a provider's expansion strategy, however, this also means that a 4G/LTE network at the location to be served is a mandatory prerequisite for also being able to offer 5G there.

In order for 5G to develop its full potential, however, a completely independent operation is required - i.e. a separate core network optimized for all the technical properties of 5G, the so-called "5G Core". A 5G network with a standalone 5G core is referred to as "Standalone 5G" or 5G SA for short.

Fig. 1 shows a telecommunication network 100 using a pure 5G environment.

A 5G core 110 provides three different network slices 115, 120, 125 to a car 130. A first network slice 115 is associated to third party apps of the car 130 and connects the car 130 the Internet 140, a second network slice 120 is dedicated to OEM applications of the car 130 and connects the car with a OEM 145, and a third network slice 125 is dedicated to a AVP service of the car 130 and connects the car with a AVP server 150 within a cloud environment. All the network slices 115, 120, 125 use the available RAN means 152 (like base stations 152) provided by the 5G environment. Additional sensors 160, like cameras 160, that are used to provide further information are connected via a communication link 165 to the AVP server 150. The communication link 165 can also use the available RAN 152 of the 5G environment but it can also use communication links, which are provided locally like fixed line and/or Wi-Fi means. With the means of URPS, the right network slice can be selected.

Fig. 1 also lists typical requirements regarding the communication properties needed for the third network slice 125 and the communication link 165. Typically, the third network slice 125 needs a UL BW of 300 kByte/sec, a DL BW of 1 Mbyte/sec, Median BW 100-200 kByte/sec, a latency < 50ms. Typically, the communication link 165 needs a UL BW of 0.5 - 1 MByte/sec, a DL BW of < 100 kByte/sec, a latency (wired) < 10ms.

It follows that by using the means of the 5G telecommunication network 100 in combination with components 160 provided locally within the AVP use case area, a low latency and/or high BW data communication is feasible that enables AVP parking. By using the technique of NWS, dedicated network resources can be made available between the car 130 and the AVP server 150, wherein the AVP server 150 can be located locally or in an edge cloud to guarantee low latency and high throughput demand even in scenarios when the 5G cell is overloaded by other requests.

However, problems can occur if 5G connectivity with NWS cannot be provided to the car 130 for the AVP use case. Those regions without 5G connectivity can be called legacy areas and it can happen that the communication of the car 130 is provided by means of a LTE core with a 4G radio RAN-frontend or a 5G NR RAN-frontend (5G NSA).

It is the task of the invention to provide and to guarantee a dedicated communication level to the car 130 by means of the LTE core that enables AVP, or more generally to provide and guarantee a dedicated communication level to a UE by means of the LTE core that provides a certain QoS level to run a certain service or application.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method is disclosed to dynamically provide dedicated telecommunication network resources between an UE and a telecommunication network. The UE can be in principle any entity having a telecommunication module like a smart phone, a computer, a tablet but also a vehicle like a train, patrol or a car - especially a car in a AVP use case. The telecommunication network can comprise a 5G core without NWS support, a LTE core, a 4G frontend and/or a 5G NR frontend, wherein the UE communicates with the LTE core by using the 4G frontend and/or a 5G NR frontend, the method comprising the following steps:
- Running a service on the UE, wherein the UE evaluates if the service requires certain QoS values, and if the service requires certain QoS values:
   ∘ the service can be a service that is related to the operating system of the UE. It is also possible that the service is related to an application implemented on the UE. In the case of the car, this can be the AVP service; running the service can also comprise the starting process of the service;
   ∘ the service can communicate that it requires a certain QoS levels. It is also possible that the required QoS levels of certain service are being stored in a memory of the UE;
   ∘ if the service does not require certain QoS values that is equivalent to a minimum QoS level, it is not necessary to continue with the method as described below because the service can be assumed not to depend on such a minimum QoS level;
- Checking if a communication via 5G SA, 5G NSA or LTE is available, and if the communication is only available via 5G NSA or LTE:
   ∘ each of the 5G SA, 5G NSA or LTE means can be identified by specific properties, identifiers, protocols and the like, which is known to the person skilled in the art. For that purpose, the UE can use a cellular detection unit that can be implemented functionally as software within the UE or as a standalone unit;
   ∘ if 5G SA is available the UE can be delivered with guaranteed QoS levels due to the network slicing and URSP techniques; if only 5G NSA or LTE is available then the communication uses the 4G/LTE core that does not provide network slicing and URSP techniques to guarantee a certain QoS level to the UE, in particular the car; hence, in the latter case "something needs to be done";
- Using an API interface by the UE to communicate required QoS values via the 4G frontend or the 5G NR frontend to the LTE core or using the API interface by the UE to communicate the required QoS values via the 4G frontend or the 5G NR frontend to the 5G SA core without NWS support;
   ∘ the LTE core cannot provide slicing, but within the LTE core it is possible to set network resources in order to provide the required QoS values to the UE; those required QoS values can be made known to the LTE core by the UE by using the API interface;
   ∘ If using the 4G frontend or the 5G NR frontend or due to other technical reasons it can be the case that even if the 5G SA core is implemented no network slicing - no NWS support - is possible. However, also in this case it is possible to set certain quality flags accordingly in order to mimic a slicing behavior;
- Providing communication resources by the LTE core or by the 5G SA core without NWS support to the UE according to the required QoS values.
   ∘ the LTE system, in particular an automated algorithm of the UE system, sets the resources of LTE core and/or of the related RAN means of 4G frontend or of the 5G NR accordingly to provide the required QoS values to the UE; the 5G SA core without NWS support, sets the resources of the 5G SA core and/or of the related RAN means of 4G frontend or of the 5G NR accordingly to provide the required QoS values to the UE as to mimic slicing;
   ∘ in particular, the LTE system knows the communication means associated to the service that means which network resources like communication links, RAN entities, and/or servers are actually used for the service, wherein only those network resources who participate to the service are adjusted accordingly; this can be also expressed as that the complete chain of communication related to the service of the UE is set to provide the required QoS values;

This provides the advantage of overcoming the problem existing today that no guaranteed QoS can be provided to a UE in the presence of a LTE core or by the 5G SA without NWS support. The method is basically an UE based decision and action flow because the UE determines if it needs a certain guaranteed QoS level and does the action towards the LTE core or the 5G SA core without NWS support to get this guaranteed QoS level. A decision and action flow within the LTE network or the 5G core without NWS support of the mobile network operator can ensure that QoS mechanisms can be provided which are similar to 5G network slicing with respect to guaranteeing a certain level of QoS for the UE. If some advantages or technical effects of the invention are explained with the context of the LTE network, then this also applies to the case that the 5G SA core without NWS.

In an embodiment, the UE determines the required QoS values associated to the service, in particular wherein the UE extracts appropriate 5QI or QCI parameters corresponding to the required QoS values by using a dedicated translation table. In an embodiment, the required QoS values are provided to the LTE core or the 5G SA core without NWS support as 5QI values in the case of the 5G NR frontend and as QCI values in the case of the 4G frontend.

This provides the advantage that the 5QI parameters are the parameters that can be used by the LTE core or the 5G SA core without NWS support to set the network resources of a 5G NR frontend accordingly and that the QCI parameters are the parameters that can be used by the LTE core or the 5G core without NWS support to set the network resources of a 4G frontend accordingly. Hence, there is no need that the LTE core or the 5G SA core without NWS support determines the related parameters but this task is outsourced to the UE.

In an embodiment, 5G NSA or LTE is used when 5G SA is not available or network slice setup of 5G SA fails.

This provides the advantage that 5G NSA or LTE with guaranteed QoS levels can be used even if it is detected that 5G SA is in principle available but at least temporarily not accessible.

In an embodiment the UE sends information in addition to the required QoS values to the LTE network or the 5G SA core without NWS support, wherein the information send by the UE via the API interface comprises: i) authorization data, wherein the authorization data can comprise an ID of the UE or of an ID of the user of the UE, in particular in combination with a password, so that the LTE core or the 5G core without NWS support can be configured to only allow authorized users/UEs to trigger the adjustment of the LTE network resources; ii) service ID-data, wherein the service ID-data comprises information about the service that can be used by the LTE network resources to set up the adjustment of the network resources accordingly, for example if the service requires certain encryptions, if the service takes a certain amount of time, etc.; iii) timing data, wherein the timing data can comprise information when to start and/or when to stop providing the requested QoS values; iv) type of traffic data or QoS data, wherein the type of traffic data can comprise a required bandwidth value and/or latency value; v) traffic identification like the IP address of the UE; vi) data of a communication partner of the UE associated to the service, wherein information about the communication partner of the UE can comprise its ID, its IP and/or its location, based on this information, the LTE network can also set up the appropriate QoS values for the communication partner of the UE, wherein the communication partner can be a loT device or a server within the cloud environment. If the appropriate QoS values would not be guaranteed for the communication partner it can happen that the whole service cannot run appropriately. As a concrete example: if in the case of AVP parking latency of < 50 ms is being required then it is necessary that the sensors 160 as well as the AVP server 150 can also provide a communication with a latency of < 50 ms.

In an embodiment, the communication partner is located in an edge cloud or in a local communication environment.

Both locations can lead to better QoS values. In particular, if the communication partner, like the AVP server and/or the sensors, located within the local communication environment they can at least partly use Wi-Fi and/or fixed line communication links which are independent of the LTE core network, which reduces the "amount" of network resources that have to be adjusted to provide the required QoS values.

In an embodiment, a server of the LTE core or the the 5G SA core without NWS support obtains the information send via the API interface and determines the required QoS values as 5QI values in the case of the 5G NR frontend and as QCI values in the case of the 4G frontend.

This provides the advantage that no database needs to be implemented within the UE in order to determine the 5QI parameters and/or the QCI parameters that correspond to the QoS values.

In an embodiment, the LTE core or the the 5G SA core without NWS support sets the communication parameters of the UE or for the communication between the UE and its communication partner to the 5QI parameters or according to the QCI parameters.

This provides the advantage that the network resources are being adjusted accordingly to enable communication according to the 5QI parameters or according to the QCI parameters for the UE.

In an embodiment, the API interface is used by a functional API entity, which is implemented as software on the UE or wherein the API interface is used by a separate API entity module.

The advantage of different possibilities to implement the API interface, wherein the implementation as a software can be used for new UEs while the separate API entity module can be used for legacy UEs.

In an embodiment, the checking step is done regularly, for example every minute and/or when entering a new communication cell, and wherein 5G SA usage for the service is initiated if available.

This provides the advantage that a switch from the LTE core to the 5G core with NWS support is being initiated if possible because the 5G core with NWS support is even better suited to fulfill the task of providing a guaranteed QoS to the UE.

According to a second aspect of the invention, a API entity is disclosed, wherein the API entity comprises
- a communication interface configured to receive service-information about a service running on a UE and configured to communicate using a 4G frontend and/or a 5G NR frontend with a LTE core or with a 5G SA core without NWS support;
- a network detection unit configured to detect if a communication via 5G SA, 5G NSA or LTE is available;
- a processing unit configured to trigger required QoS values of the service to an API interface of the LTE core and/or to the 5G SA core without NWS support by using the communication interface if 5G NSA or LTE is available and if 5G SA is not available.

The API entity provides in principle analog advantages as the method described above. The API entity can be implemented functionally as software within a UE and an existing legacy UE can be upgraded with such a API entity to benefit from the invention.

According to a third aspect of the invention a UE (user equipment) is being disclosed that is configured to perform the steps of the method described above if those steps are associated to the UE. For example: the step of "Providing communication resources by the LTE core to the UE according to the required QoS values." is not performed by the UE but by the LTE core. However, the UE can be configured to set its configurations properly to correspond to the required QoS values.

In particular, the user equipment comprises
- a communication interface configured to receive service-information about a service running on the UE and configured to communicate using a 4G frontend and/or a 5G NR frontend with a LTE core and/or witha 5G SA core without NWS support;
- a network detection unit configured to detect if a communication via 5G SA, 5G NSA or LTE is available;
   ∘ the network detection unit can be implemented functionally as software within the UE, in particular within a telecommunication module of the UE;
- a processing unit configured to trigger required QoS values of the service to an API interface of the LTE core and/or the 5G SA core without NWS support by using the communication interface.

The UE provides in principle analog advantages as the method described above.

In an embodiment, the API entity can be implemented as software or as a separate entity within the UE.

According to a fourth aspect of the invention a telecommunication network is disclosed that comprises
- a LTE core and a 4G frontend and/or a 5G NR frontend and/or 5G core or a 5G SA core and a 4G frontend and/or a 5G NR frontend;
   ∘ Hence, the telecommunication network can comprise the LTE core and/or the 5G SA core without NWS support, wherein both of these cores can use the 4G frontend and/or the 5G NR frontend to communicate with the UE;
- the inventive UE described above.

In particular, the solidification network is being configured to carry out the steps of the inventive method described above.

According to a fifths aspect of the invention a usage of the telecommunication network is being for AVP-parking of a car, in particular in a communication environment in which no 5G stand-alone communication is being possible.

In the following, preferred implementation examples of the present invention are explained with reference to the accompanying figure:
- Fig. 1:: shows AVP parking of a car by using NWS and URSP of a 5G communication environment;
- Fig. 2:: shows AVP parking of a car in the case that a 5G communication environment is at least temporarily not available;
- Fig. 3:: shows a telecommunication network according to the invention;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

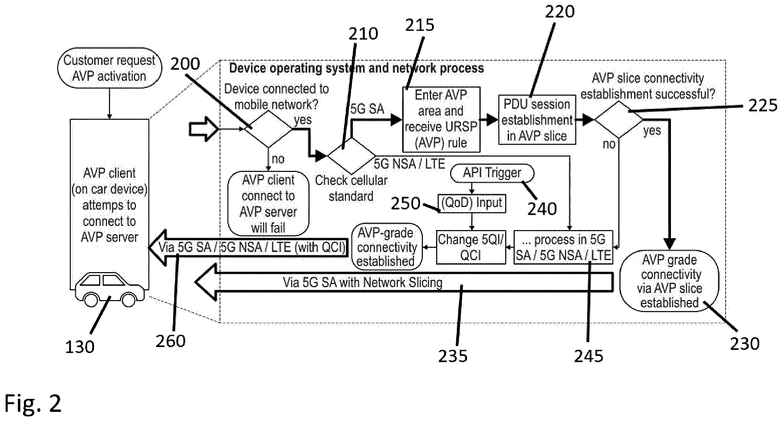

Fig. 2 shows the usage of AVP parking of a car 130 in the case that a 5G communication environment is at least temporarily not available.

Whenever an UE, e.g. the car 130, needs a guaranteed connectivity service without knowing if 5G SA is provided, a connectivity check 210 can be executed as a first step by a cellular detection unit of the car 130, wherein an AVP entity of the car attempts to connect to an AVP server 150 in step 200. The connectivity check 210 results in the knowledge if 5G SA, 5G NSA and/or LTE is being available.

In case that 5G SA is being available, NWS and URSP of the 5G environment can be used to guarantee the required QoS values to the car 130. In this case, step 215 is executed next in which the car 130 enters an AVP area while running the AVP application and receives the appropriate URSP rules by the 5G environment to connect to the appropriate slice. In step 220, a PDU session establishment is performed next in the AVP-slice that is assigned to the AVP application. Step 225: if AVP slice connectivity was successfully established then step 230 is being executed in which AVP server connectivity via AVP slice is being established and the communication of the AVP parking process is being realized by using the 5G environment via 5G SA with network slicing as shown in step 235.

In case only 5G NSA or LTE is recognized to be the available as cellular standard or 5G SA network slice setup fails, additional measures are taken as steps 240 and 245 during or after PDU/PDN session establishment to configure quality flags recognized in the respective cellular system 5QI or QCI.

In step 245, a processing without using 5G SA NWS features is performed with the respective LTE cellular core, 5G SA core, or the 5G NSA core by using a 4G frontend and/or a 5G NR frontend.

In step 240, the API entity is used in case a network slice cannot be setup to inform the LTE core or 5G SA without NWS support core about the wish to get "an equivalent service" with respect to QoS demands of the AVP service. For this reason, the car 130 triggers the API entity that creates a QoS or QoD Input 250 towards the LTE core or the 5G SA core without NWS support. Along with that, the car 130 can send additional information towards the API entity, which can be transmitted by the API entity to the LTE core or the 5G SA core without NWS support, too: i) Eligibility (authorize), ii) service, iii) type of traffic (e.g., high-bandwidth, low-latency, ...), iv) traffic identification (e.g., IP address) and/or v) indication of the required quality demand (QoD).

While the API entity may be deployed as a separate entity, the API entity in a 5G SA system could correspond to or interact with a 5G Network Exposure Function (NEF).

Finally, through the API entity the respective 5G or 4G core functionalities are instructed to apply the right 5GQ or QCI values to the traffic or traffic subset between UE and core in step 250. For example, this uses PCF or PCRF to put the process chain of quality assignment, traffic matching and resource allocation into operation.

In step 260, the communication between the car 130 and the AVP server 150 is established by via 5G SA or NSA by using appropriate 5G QI parameters or via the LTE core by using appropriate QCI parameters.

By this invention, a 5G SA network slice independent solution is provided which offers similar data transport characteristics. Moreover, the system uses 5G SA inherent capabilities of Network Slicing whenever available helping to reduce additional effort introduced by this invention.

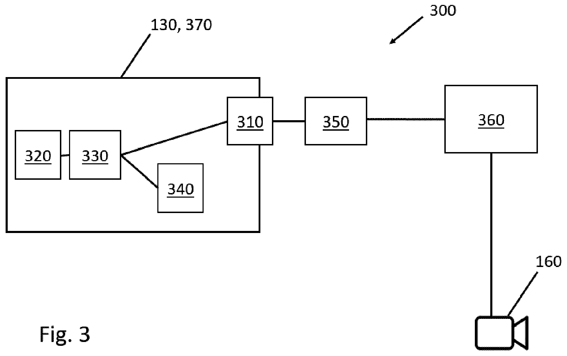

Fig. 3 shows a telecommunication network 300 according to the invention. The telecommunication network 300 is configured to perform the steps of the inventive method. The telecommunication network 300 comprises the user equipment 130 that can be the car 130 shown in Fig. 2. The UE 130 comprises a communication interface 310 that is configured to receive service information about a service 320 running on the UE 130. A processing unit 330 can be configured to route the service information to the communication interface 310. The processing unit 330 can also be configured to trigger required QoS values of the service in such a way to the communication interface 310 that the communication interface 310 transmits those required QoS values to an API interface of a LTE core and/or a 5G core without NWS support. The UE 130 also comprises a network detection unit 340 that is configured to detect if a communication via 5G SA, 5G NSA or LTE is being available.

Hence, the telecommunication network 300 also comprises a radio network access network entity 350 that can be a 4G frontend or a 5G NR frontend that connects the UE 130 to a LTE core 360 or a 5G core 360 with or without NWS support.

As described above within the context of Fig. 2, by providing the required QoS values to the LTE core 360 or the 5G core 360 without NWS support, the LTE core 360 or the 5G core 360 without NWS support can set quality flags accordingly to guarantee a certain QoS level to the UE 130. The same QoS level can also be provided to other entities like the cameras 160 that are connected to the LTE core 360 or the 5G core 360 without NWS support in order to be incapable to run the use case of AVP parking of the car.

An API entity 370 can be built similar to the UE 130 in that that it can also comprise the communication interface 310, the network detection unit 340 and the processing unit 330. The API entity 370 can then be implemented in a UE 130 like a car or a LTE core 360 or the 5G core 360 without NWS support and perform the steps according to the invention.

## Claims

1. A method to dynamically provide dedicated telecommunication network resources between an UE (130) and a telecommunication network (100), wherein the telecommunication network (100) comprises a 5G SA core without NWS support (245), a LTE core (245) and a 4G frontend and/or a 5G NR frontend, wherein the UE communicates with the LTE core by using the 4G frontend and/or a 5G NR frontend, the method comprising the following steps:
• Running a service on the UE, wherein the UE evaluates if the service requires certain QoS values, and if the service requires certain QoS values:
• Checking (210) if a communication via 5G SA, 5G NSA or LTE is available, and if the communication is only available via 5G NSA or LTE:
• Using an API interface by the UE to communicate required QoS values (250) via the 4G frontend or the 5G NR frontend to the LTE core or using the API interface by the UE to communicate required QoS values (250) via the 4G frontend or the 5G NR frontend to the 5G SA core without NWS support;
• Providing communication resources by the LTE core or by the 5G SA core without NWS support to the UE according to the required QoS values.

2. The method of claim 1, wherein the UE determines the required QoS values associated to the service, in particular wherein the UE extracts the appropriate 5QI or QCI parameters corresponding to the required QoS values by using a dedicated translation table.

3. The method of any of the claims, wherein the required QoS values are provided to the LTE core as 5QI values in the case of the 5G NR frontend and as QCI values in the case of the 4G frontend.

4. The method of any of the claims, wherein 5G NSA or LTE is used when 5G SA is not available or network slice setup of 5G SA fails.

5. The method of any of the claims, wherein information send via the API interface comprises: i) authorization data, ii) service ID-data, iii) timing data, iv) type of traffic data, v) QoS data, vi) data of a communication partner associated to the service and/or vii) traffic indication.

6. The method of claim 5, wherein the communication partner is located in an edge cloud or in a local communication environment.

7. The method of any of the claims, wherein a server of the LTE core or the 5G SA core without NWS support obtains the information send via the API interface and determines the required QoS values as 5QI parameters in the case of the 5G NR frontend and as QCI parameters in the case of the 4G frontend.

8. The method of any of the claims, wherein the LTE core or the 5G SA core without NWS support sets the communication parameters of the UE or for the communication between the UE and its communication partner according to the 5QI parameters or according to the QCI parameters.

9. The method of any of the claims, wherein the API interface is used by a functional API entity, which is implemented as software on the UE or wherein the API interface is used by a separate API entity module.

10. The method of any of the claims, wherein the checking step is done regular, and wherein 5G SA usage for the service is initiated if available.

11. API entity comprising
• a communication interface (310) configured to receive service-information about a service running on a UE and configured to communicate using a 4G frontend and/or a 5G NR frontend with a LTE core or with a 5G SA core without NWS support;
• a network detection unit (340) configured to detect if a communication via 5G SA, 5G NSA or LTE is available;
• a processing unit (330) configured to trigger required QoS values of the service to an API interface of the LTE core and/or the 5G SA core without NWS support by using the communication interface.

12. User equipment comprising
• a communication interface (310) configured to receive service-information about a service running on the UE and configured to communicate using a 4G frontend and/or a 5G NR frontend with a LTE core or with a 5G SA core without NWS support;
• a network detection unit (340) configured to detect if a communication via 5G SA, 5G NSA or LTE is available;
• a processing unit (330) configured to trigger required QoS values of the service to an API interface of the LTE core and/or to trigger required QoS values of the service to an API interface of the 5G SA core without NWS support by using the communication interface.

13. User equipment of claim 12 comprising the API entity (370) of claim 12 as a separate entity or as functional unit implemented as software.

14. Telecommunication network comprising
• a LTE core (360) and a 4G frontend (350) and/or a 5G NR frontend (350) or a 5G SA core (360) without NWS support and a 4G frontend (350) and/or a 5G NR frontend (350);
• an UE (130) of claim 13.

15. Usage of the telecommunication network (300) according to claim 14 for AVP parking of a car.
